# EUROPÄISCHE PATENTSCHRIFT

(11) **EP 0 439 496 B1**
(45) Veröffentlichungstag und Bekanntmachung des Hinweises auf die Patenterteilung: **19.05.1993**
(21) Anmeldenummer: 89911767.5
(22) Anmeldetag: 19.10.1989
(51) Int. Cl.: G03B 1/22

(54) **FILMANTRIEBSSYSTEM FÜR KAMERA**
A FILM SYSTEM FOR A CINE CAMERA
DISPOSITIF D'ENTRAINEMENT DU FILM POUR APPAREIL DE PRISES DE VUES CINEMATOGRAPHIQUES

(30) Priorität: 21.10.1988 DE 3835829
(43) Veröffentlichungstag der Anmeldung: 07.08.1991
(73) Patentinhaber: ARNOLD & RICHTER CINE TECHNIK GMBH & CO. BETRIEBS KG., D-80799 München (DE)
(72) Erfinder: BLASCHEK, Otto, D-8011 Aschheim (DE)
(74) Vertreter: Maikowski, Michael, Dipl.-Ing. Dr.
(86) Internationale Anmeldenummer: DE8900669
(87) Internationale Veröffentlichungsnummer: WO9004808

(56) Entgegenhaltungen:
- FR-A- 523 383
- FR-A- 686 025
- US-A- 1 891 585
- US-A- 4 402 581

## Beschreibung

Die Erfindung betrifft ein Filmschaltwerk der im Oberbegriff des Anspruchs 1 angegebenen Art.

Aus der DE-PS 36 43 594 ist ein Filmschaltwerk in einer Laufbild-Filmaufnahmekamera bekannt, das den zu transportierenden, an beiden Rändern perforierten Film an einem Belichtungsfenster mit Hilfe von Transportgreifern schrittweise vorbeibewegt, welche zusammen mit dem jeweils zugehörigen Transportgetriebe beidseitig und symmetrisch zu der auf der Filmmitte senkrecht stehenden Mittelebene angeordnet sind. Dabei werden die Transportgreifer von dem jeweils zugehörigen Transportgetriebe so bewegt, daß die Transportspitze der Transportgreifer eine längliche, in sich geschlossene Kurve durchläuft, die an ihrem einen Ende in die Filmlauffläche eintritt und sie am anderen Ende wieder verläßt.

Zu diesem Zweck weist jedes Transportgetriebe zwei Wellen auf, die mit jeweils einer Kurbel gekoppelt sind. Das Ende der einen Kurbel bildet einen Gelenkpunkt, an dem die Transportgreiferlasche angelenkt ist. Im Mittelabschnitt der Transportgreiferlasche befindet sich ebenfalls ein Gelenkpunkt, an dem ein Lenker angelenkt ist, der mit dem Ende der anderen Kurbel verbunden ist. Die beiden mit den Kurbeln verbundenen Wellen sind über ein umlaufendes, gezahntes Riemenrad mit einer Hauptantriebswelle verbunden, wobei die einander gegenüberliegenden Transportgetriebe von der gleichen gemeinsamen Antriebswelle angetrieben werden, die beidseitig der Mittelebene in jeweils einem Lager gelagert ist.

Zusätzlich ist ein Kurbeltrieb für einen Sperrgreifer vorgesehen, der mit der das Ende der Transportgreiferlasche antreibenden Welle verbunden ist. Dabei ist der Winkelversatz zwischen den beiden Kurbeln auf der gemeinsamen Welle so gewählt, daß der Sperrgreifer sich außerhalb der Filmlauffläche befindet, solange die Transportgreiferspitzen den Film weiterbewegen.

Ein Nachteil des bekannten Filmschaltwerks besteht darin, daß zur Änderung des Vorschubschritts und der Winkelverhältnisse, das heißt der Eintauchtiefe und Spitzenbahn des Transportgreifers erhebliche konstruktive Änderungen erforderlich sind und daß die Hubtiefe verhältnismäßig groß ist, so daß der Film durch Eingreifen der Transportgreiferspitzen in die Perforationslöcher in einer Bogenbahn bewegt wird, was eine sogenannte "Sägewirkung" infolge des Gleitens der Transportgreiferspitze in der Filmperforation zur Folge hat.

Aus der DE-PS 385 819 ist ein Greiferschaltwerk bekannt, das aus zwei Kurbeln besteht, von denen die erste Kurbel auf das eine Ende eines Lenkers mit den Greiferstiften wirkt, während die zweite Kurbel über einen Zwischenhebel mit dem anderen Ende des Lenkers verbunden ist. Beide Kurbeln sind durch Zahnräder miteinander gekoppelt. Bei diesem bekannten Greiferschaltwerk sind zur Änderung der Eintauchtiefe und der Bewegungsbahn der Greiferspitzen erhebliche konstruktive Änderungen erforderlich, um in Abhängigkeit von den lokalen Gegebenheiten einen möglichst geringe aber ausreichende Eintauchtiefe der Greiferspitzen zu erzielen.

Aufgabe der vorliegenden Erfindung ist es, ein gattungsgemäßes Filmschaltwerk im Hinblick auf die Anpassbarkeit an lokale Gegebenheiten zu verbessern.

Diese Aufgabe wird durch das kennzeichnende Merkmal des Anspruchs 1 gelöst.

Die erfindungsgemäße Lösung schafft ein Filmschaltwerk, das in einfacher Weise an die lokalen Gegebenheiten angepaßt werden kann, so daß mit geringfügigen Änderungen unterschiedliche Schritt- und Zugwinkelverhältnisse sowie eine unterschiedliche Hubtiefe ermöglicht und ein leichtes Auswuchten des Filmschaltwerks sichergestellt wird, wobei zusätzlich ein geringer Platzbedarf im Bereich der Filmbahn erzielt wird.

Durch die verbesserte Anpassbarkeit des Filmschaltwerks an lokale Gegebenheiten wird eine extrem hohe Verschleißfestigkeit und Laufruhe des Filmschaltwerks erzielt, wobei andere Schritt- und Winkelverhältnisse mit geringen Umbaumaßnahmen ermöglicht und Auswuchtprobleme vermieden werden. Darüber hinaus wird eine mit geringen technischen Mitteln veränderbare Arbeitskurve des Tauchgreifers erreicht, dessen Greiferspitzen flach aber ausreichend in die Filmperforation eindringen und am Ende des Hubes in kürzestmöglicher Zeit nahezu senkrecht aus der Filmperforation herausgezogen werden.

Das Filmschaltwerk ermöglicht mit geringen mechanischen Mitteln andere Schritt- und Winkelverhältnisse, bspw. 2-, 3-, 4-, 5- oder 6-Lochschaltungen sowie wahlweise einen ein- und doppelseitigen Antrieb, bei dem zwei Filmschaltwerke in zwei Perforationsreihen eines Films eingreifen und den Film transportieren.

Dadurch wird ein leicht zu variierendes Filmschaltwerk geschaffen, bei dem nur geringfügige Änderungen zur Anpassung an lokale Gegebenheiten erforderlich sind, wo bisher stets neue Greifersysteme entwickelt und konstruiert werden mußten. Beim vorliegenden Filmschaltwerk kann durch einfaches Austauschen einzelner Elemente des Filmschaltwerks die Größe des Hubes und die Eintauchtiefe des Tauchgreifers verändert werden, so daß Transportschritte unterschiedlicher Größe vollziehbar sind bzw. die Bewegungsbahn der Greiferspitzen nahzu beliebig variiert werden kann.

Eine vorteilhafte Ausgestaltung der erfindungsgemäßen Lösung ist dadurch gekennzeichnet, daß der Steuerarm mit seinem dem Drehgelenk entgegengesetzten Ende auf einer Steuerkurve gleitet. Durch Verwendung einer Steuerkurve bestehen mehr Gestaltungsmöglichkeiten bei der Bewegung des Tauchgreifers, so daß nahezu jede Bewegungsbahn der Greiferspitzen möglich ist. Als Nachteil muß dabei gegebenenfalls ein erhöhtes Geräusch in Kauf genommen werden.

Eine weitere Ausgestaltung der erfindungsgemäßen Lösung ist dadurch gekennzeichnet, daß der Greiferhebel über das ortsfeste Lager hinaus verlängert ist und an seinem Ende ein Drehlager trägt, das über einen Sperrgreiferhebel sowie über ein weiteres Drehlager hinweg einen senkrecht zur Filmlauffläche gelagerten Sperrgreiferstift hin und her bewegt.

Durch die Anbindung des Sperrgreifers an den Greiferhebel wird sichergestellt, daß ohne konstruktive Änderungen der Ansteuerung für den Sperrgreifer dessen Bewegung mit der Bewegung des Tauchgreifers koordiniert wird, so daß eine Änderung der Kinematik des Tauchgreifers automatisch eine Änderung der Bewegung des Sperrgreifers mit sich bringt.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine schematische Darstellung der einzelnen Elemente des erfindungsgemäßen Filmschaltwerks;
- Figur 2: eine Darstellung gemäß Figur 1 zur Erläuterung der Variation von Abmessungen einzelner Elemente des Filmschaltwerks;
- Figur 3: eine teilweise im Schnitt dargestellte Seitenansicht des Filmschaltwerks;
- Figuren 4 bis 6: verschiedene Ansichten der Schaltwerksachse
- Figur 7: eine grafische Darstellung der Tauchgreifer-Arbeitskurve ;
- Figur 8: eine detaillierte Darstellung der Greiferspitzen ;
- Figur 9: eine Abwicklung des Eingriffs der Greiferspitzen in die Perforationslöcher eines Film und
- Figur 10: eine Draufsicht auf die Sperrgreiferspitze.

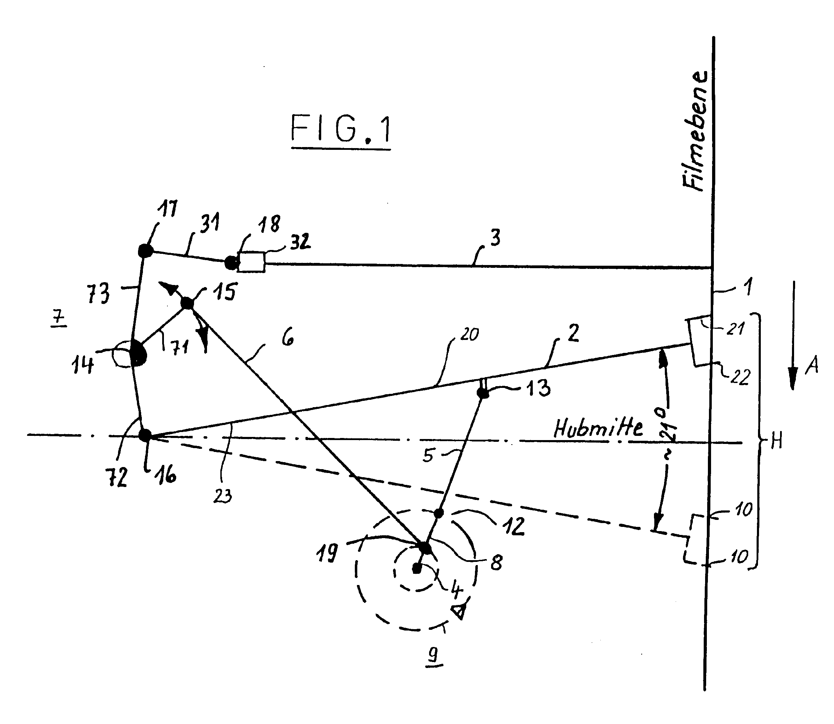

In den Figuren 1 bis 3 ist schematisch bzw. in teilweise geschnittener Seitenansicht der konstruktive Aufbau des erfindungsgemäßen Filmschaltwerks für eine Laufbild-Filmaufnahmekamera zum Transport eines Films 1 dargestellt.

Das Filmschaltwerk weist einen Tauchgreifer 2 auf, der an seinem einen Ende mit Greiferspitzen 21, 22 versehen ist, die in die Perforationslöcher 10 des Films 1 eingreifen. Der Mittenabschnitt 20 des Tauchgreifers 2 weist einen Greiferlaschenpunkt 13 auf, an dem das eine Ende eines Arbeitsarms 5 einer Greiferkurbel angelenkt ist, dessen anderes Ende mit einem Greiferkurbelgelenk 12 verbunden ist.

Das Greiferkurbelgelenk 12 ist Teil eines Arbeitsarms 8, die zusammen mit einem Kurbelarm 4 mit einer Schaltwerkachse 9 verbunden ist. Die Antriebswelle 11 ist über ein Kupplungsteil mit einem nicht näher dargestellten Antriebsmotor verbunden.

Der Kurbelarm 4 weist ein Steuerkurbelgelenk 19 auf, an dem ein Ende eines Steuerarms 6 angelenkt ist. Die Antriebswelle 11, der Kurbelarm 4 sowie der Antriebsarm 8 sind Teile einer Schaltwerkachse 9, die zusätzlich ein Auswuchtsegment 40 aufweist, mit dem ein dynamisches Auswuchten der Antriebsteile des Filmschaltwerks in einfacher Weise möglich ist.

Das andere Ende des Steuerarms 6 ist über ein Drehgelenk 15 mit einem Schwingenarm 71 verbunden, der einen Hebel einer Schwinge 7 bildet. Die Schwinge 7 ist in einem ortsfesten Lager 14 gelagert und weist einen zweiten Hebel in Form eines Greiferhebels 72 sowie eine Verlängerung 73 auf, wobei die drei Hebel 71, 72, 73 der Schwinge 7 in fester geometrischer Zuordnung zueinander stehen.

Das Ende des Greiferhebels 72 bildet ein Greifergelenk 16, an dem das den Greiferspitzen 21, 22 entgegengesetzte Ende 23 des Tauchgreifers 2 angelenkt ist.

Die Verlängerung 73 ist mit einem Drehlager 17 verbunden, an dem ein Sperrgreiferhebel 31 angelenkt ist. Der Sperrgreiferhebel 31 ist über ein Drehlager 18 mit einer Sperrgreiferlasche 32 verbunden, die auf einen Sperrgreiferstift 3 aufgeschrumpft ist, dessen vordere, abgeflachte Spitze zum Bildstand in die Perforationslöcher 10 des Films 1 eingreift.

Figur 1 zeigt in durchgezogenen Linien den Hubanfang des Tauchgreifers 2 sowie den außer Eingriff mit den Perforationslöchern 10 des Films 1 stehenden Sperrgreiferstift 3, während in gestrichelten Linien das Hubende des Tauchgreifers 2 sowie der im Eingriff mit den Perforationslöchern 10 stehende Sperrgreiferstift 3 dargestellt ist. Die Transportrichtung des Films verläuft somit in Richtung des Pfeils A, wobei der Greiferhub H ist.

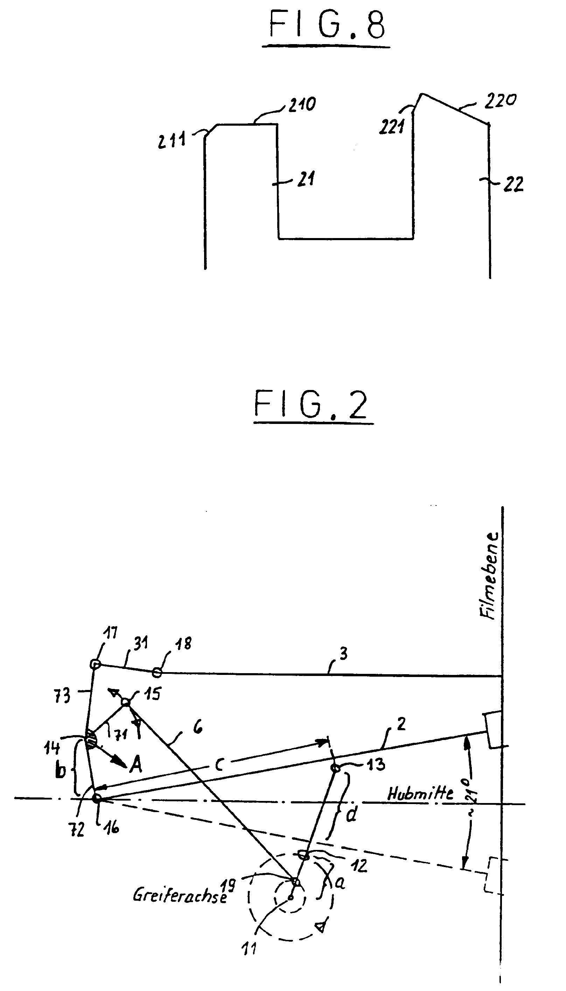

Figur 2 verdeutlicht die Hebellängen und Hauptabmessungen des Filmschaltwerks in einer schematischen Skizze.

Analog zur Darstellung gemäß Figur 1 liegen die Antriebswelle 11, das Steuerkurbelgelenk 19, an dem der Steuerarm 6 angelenkt ist, das Greiferkurbelgelenk 12, an dem der Arbeitsarm 5 angelenkt ist, und der Greiferlaschenpunkt 13 an dem der Arbeitsarm 5 mit dem Mittenabschnitt 20 des Tauchgreifers 2 verbunden ist, auf einer Linie.

Wie der Darstellung gemäß Figur 2 zu entnehmen ist, überstreicht der Tauchgreifer bei seiner Hin- und Herbewegung ein Winkel von ca. 21° um die Hubmitte. Für die Durchführung der Hubbewegung des Tauchgreifers führt der Steuerarm 6 einen geringen Hub aus, während beispielsweise in Folge der Schenkellänge der Verlängerung 73 der Schwinge 7 ein großer Hub im Bereich des Drehlagers 17 durchgeführt wird, der ein entsprechend tiefes Eintauchen des Sperrgreiferstiftes 3 in die Perforationslöcher 10 des Films 1 zur Folge hat.

Ein wesentlicher Vorteil der erfindungsgemäßen Lösung besteht darin, das einerseits durch die Anordnung eines Steuerarms 6 ein geringer Hub dieses Steuerarms 6 ausreicht, um eines großen Hub des Sperrgreiferstiftes 3 zu bewirken und andererseits durch geringfügige Änderungen der Abmessungen der einzelnen Filmschaltwerkselemente bzw. durch eine Verlagerung der Gelenkpunkte die Eintauchtiefe und Hublage zu beeinflussen. Diese einfache Einflußnahme auf die Hublage und Eintauchtiefe der Spitzen des Sperrgreiferstiftes 3 sowie der Tauchgreiferspitzen 21, 22 ist insbesondere für die Ausrüstung von unterschiedlichen Filmaufnahmekameras vorteilhaft, da mit einfachen Mitteln den jeweiligen Anforderungen Rechnung getragen werden kann.

So ist in einfacher Weise das erfindungsgemäße Filmschaltwerk auf Ein-, Zwei-, Drei-, Vier- oder Fünf-Lochschaltungen umrüstbar, ohne daß dafür ein gesondertes Filmschaltwerk konstruiert werden muß. Ebenso kann eine gerade oder gebogene Filmbahn durch eine entsprechende Eintauchtiefe der Tauchgreiferspitzen bewirkt werden.

Auch ist eine ein- oder zweiseitige Anordnung des Filmschaltwerks zum einseitigen oder zweiseitigen Transport eines Films möglich. Ein wesentlicher Vorteil der erfindunggemäßen Lösung besteht auch darin, daß durch eine entsprechende Verlagerung der Filmschaltwerksteile von der Filmebene weg ausreichend Platz im Bereich der Filmebene geschaffen wird, um dort zusätzliche Elemente einer Filmkamera anordnen zu können.

Gemäß Figur 2 kann eine gleichmäßige Änderung der Hubgröße H dadurch erzielt werden, daß die Länge a des Antriebsarms 8 verändert wird. Eine einseitige Änderung der Hubgröße im oberen Hubbereich ist dadurch zu erzielen, daß das Maß b des Greiferhebels 72 verändert wird.

Eine einseitige Änderung der Hubgröße im unteren Bereich wird durch eine Änderung des Maßes c des Tauchgreifers 2 zwischen dem Greifergelenk 16 und dem Greiferlaschenpunkt 13 sowie durch eine Verlagerung der Achsmitte der Schwinge 7 in Richtung auf den Tauchgreifer entsprechend dem Pfeil A erzielt.

Eine Änderung der Hublage ist durch Änderung des Maßes d des Arbeitsarms 5 möglich.

Sämtliche Gelenkpunkte 12 bis 19 des Filmschaltwerks können wahlweise aus Kugellagern oder Gleitlagern bestehen, wobei erstere einen wartungsfreien Betrieb des Filmschaltwerks ermöglichen, während letztere für eine noch größere Laufruhe sorgen, aber insbesondere bei Filmkameras mit hohen Transportgeschwindigkeiten einer gelegentlichen Wartung bedürfen.

Eine weitere Möglichkeit besteht darin, Wälzlager zu verwenden, die sich einerseits durch Wartungsfreiheit auszeichnen und andererseits eine größere Laufruhe als Kugellager aufweisen. Je nach Anwendungszweck und Einsatzgebiet der Laufbild-Filmaufnahmekamera kann daher eine geeignete Lagerung der Gelenkpunkte vorgesehen werden, wobei keinerlei konstruktive Änderungen des Filmschaltwerks erforderlich sind.

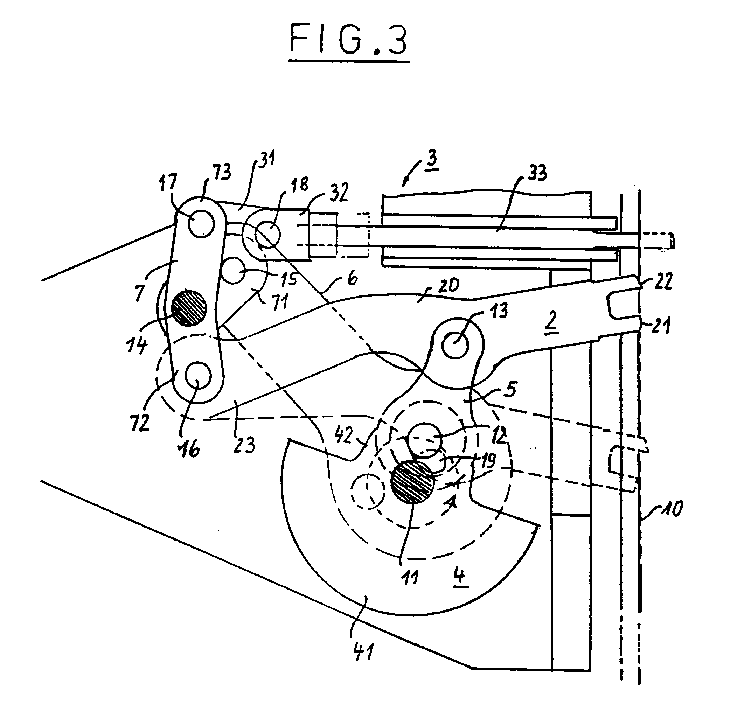

Die in Figur 3 dargestellte Seitenansicht des Filmschaltwerks zeigt die geometrische Konfiguration der einzelnen Schaltwerkselemente und verdeutlicht insbesondere den Aufbau der Schaltwerkachse 9, der Schwinge 7 und des Tauchgreifers 2.

Die Schaltwerkachse 9 weist das Greiferkurbelgelenk 12 sowie das Steuerkurbelgelenk 19 auf, an denen der Arbeitsarm 5 bzw. der Steuerarm 6 angelenkt sind. Zusätzlich weist die Schaltwerkachse 9 ein Auswuchtsegment 40 auf, das der dynamischen Auswuchtung des Filmschaltwerks dient.

Die Schwinge 7 besteht aus dem einen stumpfen Winkel zwischen sich einschließenden Greiferhebel 72 und der Verlängerung 73, an denen in festem Winkelverhältnis zueinander der Schwingenarm 71 angelenkt ist. Die Schwinge 7 schwingt angetrieben durch den Steuerarm 6 um das ortsfeste Lager 14.

Der Sperrgreiferstift 3 greift mit seiner Spitze während des Bildstandes in ein Perforationsloch 10 des Films 1 und steht während des Filmtransports außer Eingriff mit den Perforationslöchern 10 des Films 1. Durch Drehen des Sperrgreiferstiftes 3 um 180° kann in einfacher Weise eine Justierung des Sperrgreiferstiftes 3 vorgenommen werden.

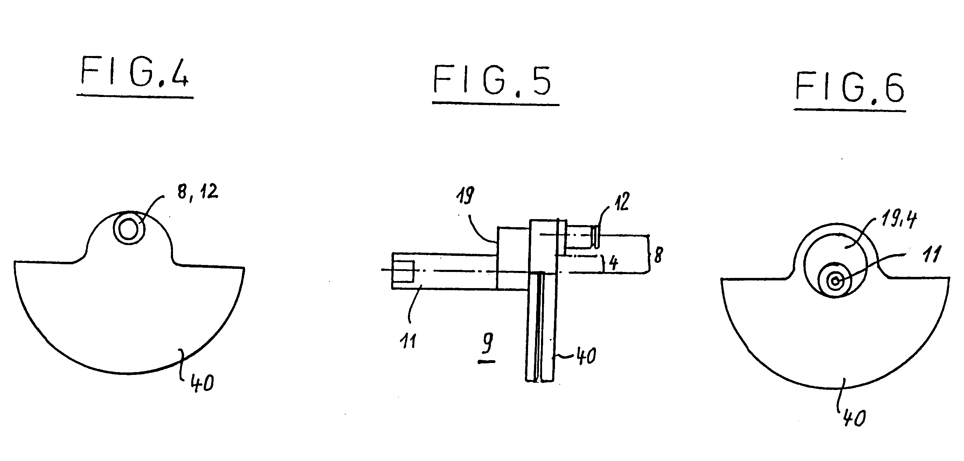

Figur 4 zeigt eine Draufsicht, Figur 5 eine Seitenansicht und Figur 6 eine Rückansicht der Schaltwerkachse 9.

Die Schaltwerkachse 9 weist die mit einem Antriebsmotor verbundene Antriebswelle 11, den Kurbelarm 4 mit dem Steuerkurbelgelenk 19 zum Anlenken des Steuerarms 6, das Auswuchtsegment 40 sowie den Antriebsarm 8 mit dem Greiferkurbelgelenk 12 zum Anlenken des Arbeitsarms 5 auf. Das Auswuchten der Schaltwerkachse erfolgt durch Veränderung des Auswuchtsegments 40, da sowohl der Kurbelarm 4 als auch der Antriebsarm 8 auf der einen Seite der Schaltwerkachse 9 angeordnet sind, so daß in einfacher Weise ein dynamisches Auswuchten durchführbar ist.

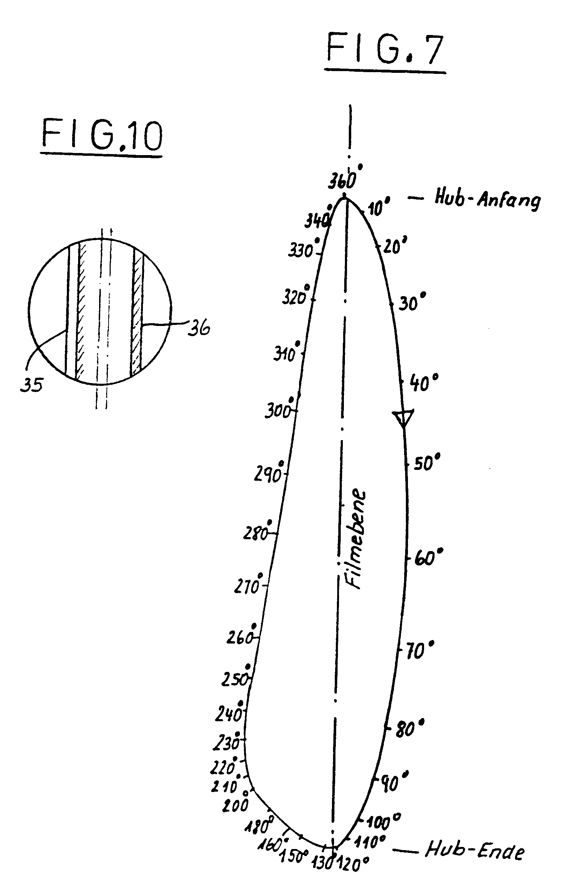

Figur 7 zeigt schematisch die Transportgreifer-Arbeitskurve in Bezug zur Filmebene 100 und verdeutlicht die extrem geringe Eintauchtiefe der Tauchgreiferspitzen in die Filmperforationen, so daß einerseits eine übermäßige Beanspruchung der Filmperforation vermieden und andererseits die ebene Filmbahn nicht beeinträchtigt wird.

Die in die schematische Darstellung der Tauchgreifer-Arbeitskurve gemäß Figur 3 eingetragenen Gradzahlen beziehen sich auf den Drehwinkel des Kurbelarms 4, wobei der Hubanfang mit 0° bzw. 360° festgelegt wurde. Der Darstellung gemäß Figur 3 ist zu entnehmen, daß der Kurbelarm 4 vom Hubanfang bis zum Hubende einen Drehwinkel von 120° vollzogen hat, wobei sich dieser Kurventeil des Eingriffs der Tauchgreiferspitzen in die Filmperforation durch einen ebenen, gleichmäßigen Verlauf auszeichnet.

Bei der Rückwärtsbewegung des Tauchgreifers führen die Tauchgreiferspitzen eine links der Filmebene dargestellte Bewegung aus, die sich über einen Drehwinkel von 120° bis 360° des Kurbelarms 4 erstreckt.

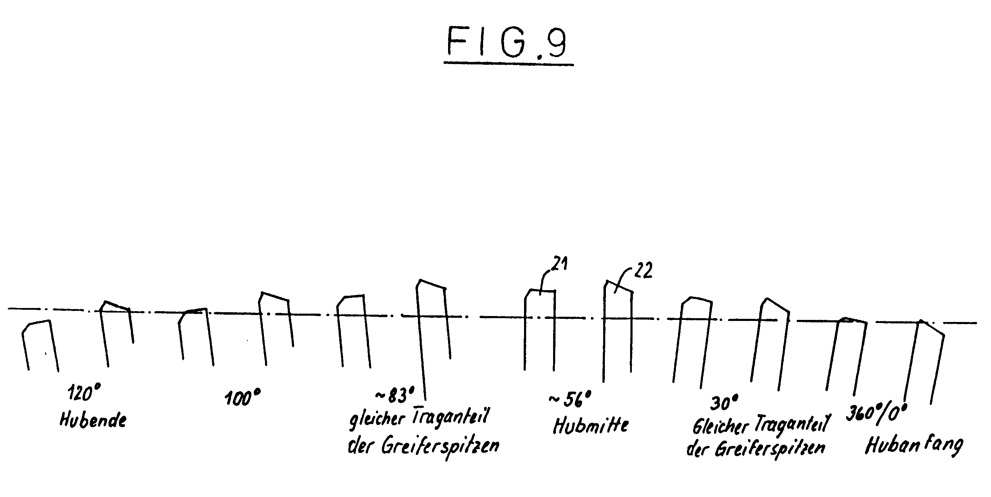

Figur 8 verdeutlicht in vergrößerter Darstellung die Form der Tauchgreiferspitzen 21, 22, die so konstruiert sind, daß einerseits ein schonender Eingriff in die Filmperforation durch einen wechselseitigen Kontakt der Tauchgreiferspitzen mit den jeweiligen Perforationskanten des Films erfolgt und andererseits der Film während der Hubbewegung des Tauchgreifers 2 an den Tauchgreiferspitzen 21, 22 entlanggleiten kann und somit nicht gezwungen ist, die geringe Hubbewegung des Tauchgreifers 2 mitzuvollziehen.

Die in Transportrichtung des Films vordere Tauchgreiferspitze 21 weist eine abgeflachte Stirnkante 210 auf, die an der in Transportrichtung des Films vorderen Kante 211 abgeschrägt ist.

Die in Transportrichtung hintere Tauchgreiferspitze 22 weist dagegen eine schräge Stirnkante 220 auf, die ebenfalls an der in Transportrichtung des Films vorderen Kante 221 abgeschrägt ist.

Figur 9 verdeutlicht die einzelnen Bewegungsphasen der Tauchgreiferspitzen beim Eingriff in die Filmperforation, wobei sechs Hubphasen beginnend bei 0° bzw. 360°, 30°, 56°, 83°, 100° und 120° dargestellt sind.

Beim Hubanfang (0° bzw. 360°) erfolgt der Filmzug ausschließlich durch die in Transportrichtung vordere Tauchgreiferspitze 21, während die in Transportrichtung des Films hintere Tauchgreiferspitze 22 mit Spiel in das folgende Perforationsloch der Filmperforation eingreift. Bei einem Drehwinkel von 30° leisten beide Tauchgreiferspitzen 21, 22 den gleichen Traganteil, da die Vorderkanten beider Tauchgreiferspitzen 21, 22 an den Vorderkanten der aufeinander folgenden Perforationslöcher der Filmperforation anliegen. Das gleiche trifft auf die Hubmitte zu, die etwa bei 56° erreicht ist.

Bei einem Winkel von 83° ist ebenfalls ein gleicher Traganteil der Tauchgreiferspitzen 21, 22 gewährleistet.

Bei einem Winkel von 100° liegt lediglich die vordere Kante der hinteren Tauchgreiferspitze 22 an der Vorderkante des betreffenden Perforationsloches an, während sich die in Transportrichtung des Films vordere Tauchgreiferspitze 21 außer Eingriff mit dem betreffenden Perforationsloch befindet.

Am Hubende (120°) liegt lediglich die abgeschrägte Vorderkante 221 der in Transportrichtung des Films hinteren Tauchgreiferspitze 22 an der Vorderkante des betreffenden Perforationsloches des Films an.

Figur 9 verdeutlicht, daß durch die spezielle Form der Tauchgreiferspitzen in Verbindung mit einer geringen Eintauchtiefe der Tauchgreiferspitzen in die Filmperforation ein Gleiten der Perforationslöcher an den Tauchgreiferspitzen entlang während der Hubbewegung gewährleistet ist, so daß der Film im wesentlichen in der Filmebene gehalten wird und keinen Kurvenverlauf annimmt.

Zur Ansteuerung des Steuerarms 6 kann anstelle eines Kurbelarms 4 durch eine Kurvensteuerung, insbesondere durch eine Gleichdickkurve erfolgen, wodurch eine Einflußnahme auf die Bewegung des Tauchgreifers zur Beeinflussung der Endpunkte der Kurve gemäß Figur 7 ermöglicht wird. Dadurch kann beispielsweise ein Verharren der durch den Steuerarm verursachten Eintauchbewegung an den Endpunkten erzielt werden, so daß nahezu beliebige Bewegungsbahnen der Tauchgreiferspitzen erzielt werden können. Auf diese Weise sind beispielsweise gerade und kreisförmige Filmbahnen mit dem erfindungsgemäßen Filmschaltwerk möglich.

Figur 10 zeigt eine Draufsicht auf die Spitze des Sperrgreiferstiftes 3, dessen Justierflächen 35, 36 gegenüber der Mitte des Sperrgreiferstiftes 3 um einen geringen Betrag versetzt sind, so daß durch Drehen des Sperrgreiferstiftes 3 um 180° ein anderer Eingriffspunkt des Sperrgreiferstiftes 3 erzielt wird. Die Justierflächen 35, 36 weisen einen gestrichelt angedeuteten Anschliff zur Erleichterung des Eingriffs des Sperrgreiferstiftes 3 in die Perforationslöcher 10 des Films 1 auf.

## Patentansprüche

1. Filmschaltwerk in einer Laufbild-Filmaufnahmekamera für ein- oder zweiseitig perforierte Filme (1), mit einem Schaltgetriebe, welches einen Tauchgreifer (2) betätigt, dessen Greiferspitzen (21, 22) den Film (1) schrittweise an dem Bildfenster der Filmaufnahmekamera vorbeibewegen und dabei längliche, in sich geschlossene Kurven durchlaufen, die an ihrem einen Ende in die Filmlauffläche eintauchen und sie am anderen Ende wieder verlassen, welches eine ortsfeste Antriebswelle (11) aufweist, die den Tauchgreifer (2) über eine zweiarmige Greiferkurbel (4, 5) antreibt, deren Antriebsarm (4) mit der Antriebswelle (11) drehfest verbunden ist, deren Greiferkurbelgelenk (12) beim Antrieb des Tauchgreifers (2) um die Antriebswelle (11) rotiert und deren Arbeitsarm (5) an dem Tauchgreifer (2) drehbar angreift, wobei das von den Greiferspitzen (21, 22) abgewandte Ende des Tauchgreifers (2) ein Greifergelenk (7) trägt, das über einen Greiferhebel (72) hinweg mit einem ortsfesten Lager (14) gelenkig verbunden ist,
**dadurch gekennzeichnet,**
daß die Antriebswelle (11) eine Steuerkurbel (4, 6, 19) mit einem Steuerkurbelgelenk (19) auf dem Antriebsarm (8) antreibt, deren Kurbelarm (4) drehfest mit der Antriebswelle (11) sowie mit dem einen Ende eines Steuerarms (6) verbunden ist, welcher an seinem anderen Ende ein Drehgelenk (15) trägt, das über einen Schwingenarm (71) an das ortsfeste Lager (14) angelenkt ist.

2. Filmschaltwerk nach Anspruch 1, **dadurch gekennzeichnet,** daß der Schwingenarm (71) Teil einer Schwinge (7) ist, die aus drei fest miteinander verbundenen, am ortsfesten Lager (14) gelagerten Armen (71, 72, 73) besteht, von denen der Schwingenarm (71) mit dem Steuerarm (6), ein Greiferhebel (72) über das ortsfeste Lager (14) hinaus verlängert ist und an seinem Ende ein Drehlager (17) trägt, das über einen Sperrgreiferhebel (31) sowie über ein weiteres Drehlager (18) hinweg einen senkrecht zur Filmlauffläche gelagerten Sperrgreiferstift (3) hin und her bewegt.

3. Filmschaltwerk nach Anspruch 1 oder 2, **dadurch gekennzeichnet,** daß der Steuerarm (6) mit seinem dem Drehgelenk (15) entgegengesetzten Ende auf einer Steuerkurve gleitet.

4. Filmschaltwerk nach einem der vorangehenden Ansprüche, **dadurch gekennzeichnet,** daß zur Anpassung der Bewegungskurve der Tauchgreiferspitze (21, 22) und der Eintauchtiefe des Sperrgreiferstiftes (3) an lokale Gegebenheiten die Lage des ortsfesten Lagers (14) sowie die wirksamen Längen des Greiferhebels (72) und der beiden Greiferkurbelarme (5, 8) veränderbar sind.

5. Filmschaltwerk nach einem der vorangehenden Ansprüche, **dadurch gekennzeichnet,** daß die Antriebswelle (11) mit einem Auswuchtsegment (40) ausgewuchtet ist, das vorzugsweise zwischen dem Greiferkurbelgelenk (12) und dem Steuerkurbelgelenk (19) angeordnet ist.

6. Filmschaltwerk nach einem der vorangehenden Ansprüche, **dadurch gekennzeichnet,** daß die Lager bzw. Gelenke (12 bis 19 ) des Schaltgetriebes als Kugellager und/oder Gleitlager ausgebildet sind.

7. Filmschaltwerk nach einem der vorangehenden Ansprüche, **dadurch gekennzeichnet,** daß der Tauchgreifer (2) zwei in Transportrichtung hintereinanderliegende Greiferspitzen (21, 22) aufweist, deren in Transportrichtung liegende Vorderkanten derart abgeschrägt sind, daß bei jedem Transportschritt zunächst die Vorderkante der ersten (21) und nachfolgend die Vorderkante der zweiten Greiferspitze (22) an der jeweils zugeordneten Perforationslochkante des Films (1) angreift, wobei sich die Vorderkante der ersten Greiferspitze (21) von der ihr zugeordneten Perforationslochkante löst, sobald die Vorderkante der zweiten Greiferspitze (22) mit der ihr zugeordneten Perforationslochkante in Kontakt kommt.

## Claims

1. A film feed mechanism in a cinematographic camera for films (1) which are perforated at one or two sides, with a control mechanism which actuates a plunging claw (2), the claw tips (21, 22) of which move the film (1) gradually past the picture gate of the cinematographic camera and in so doing travel trough elongate closed curves, which at their one end plunge into the film running surface and leave it again at the other end, which has a fixed driving shaft (11) which drives the plunging claw (2) by way of a two-armed claw crank (4, 5), the driving arm (4) of which is connected in a torsionally-fast manner to the driving shaft (11), the claw crank joint (12) of which upon the drive of the plunging claw (2) rotates about the driving shaft (11) and the working arm (5) of which acts rotatably on the plunging claw (2), in which respect that end of the plunging claw (2) which is remote from the claw tips (21, 22) carries a claw joint (7), which is connected by way of a claw lever (72) in a hinged manner to a fixed bearing (11),
characterised in that
the driving shaft (11) drives a control crank (4, 6, 19) with a control crank joint (19) on the driving arm (8), the crank arm (4) of which is connected in a torsionally-fast manner to the driving shaft (11) as well as to the one end of a control arm (6), which at its other end carries a swivel joint (15) which is hinged by way of a rocker arm (71) to the fixed bearing (14).

2. A film feed mechanism according to claim 1, characterised in that the rocker arm (71) is part of a rocker (7) which consists of three arms (71, 72, 73) which are connected securely to one another and are mounted on the fixed bearing (14), of which the rocker arm (71) is connected to the control arm (6), a claw lever (72) is extendet beyond the fixed bearing (14) and at its end carries a pivot bearing (17), which by way of a locking claw lever (31) as well as by way of a further pivot bearing (18) reciprocates a locking claw pin (3) which is mounted perpendicular to the film running surface.

3. A film feed mechanism according to claim 1 or 2, characterised in that the control arm (6) slides with its end opposed to the swivel joint (15) on a control cam.

4. A film feed mechanism according to one of the preceding claims, characterised in that, to adapt the curve of motion of the plunging claw tip (21, 22) and the depth of penetration of the locking claw pin (3) to local factors, the position of the fixed bearing (14) as well as the effective lengths of the claw lever (72) and of the two claw crank arms (5, 8) are variable.

5. A film feed mechanism according to one of the preceding claims, characterised in that the driving shaft (11) is balanced with a balancing segment (4) which is preferably arranged between the claw crank joint (12) and the control crank joint (19).

6. A film feed mechanism according to one of the preceding claims, characterised in that the bearings or joints (12 to 19) of the control mechanism are designed as ball bearings and/or sliding bearings.

7. A film feed mechanism according to one of the preceding claims, characterised in that the plunging claw (2) has two claw tips (21, 22) lying one behind the other in the transport direction, of which the front edges lying in the transport direction are bevelled in such a way that upon each transport step first the front edge of the first claw tip (21) and subsequently the front edge of the second claw tip (22) acts on the respectively associated sprocket-hole edge of the film (1), the front edge of the first claw tip (21) detaching itself from the sprocket-hole edge associated with it as soon as the front edge of the second claw tip (22) comes into contact with the sprocket-hole edge associated with it.

## Revendications

1. Système d'avancement du film d'une caméra cinématographique de prise de vues pour des films (1) perforés d'un ou de deux côtés, comportant un mécanisme d'avancement qui actionne une griffe plongeante (2), dont les pointes de griffe (21, 22) déplacent pas-à-pas le film (1) devant la fenêtre d'image de la caméra de prise de vues et alors parcourent des courbes oblongues fermées sur elles et s'enfoncent à une des extrémités de ces dernières dans la surface de défilement du film et la quittent à nouveau à l'autre extrémité, et qui présente un arbre d'entraînement (11) de position fixe qui entraîne la griffe plongeante (2) par l'intermédiaire d'une manivelle de griffe (4, 5) à deux bras dont le bras d'entraînement (4) est raccordé rigidement en rotation à l'arbre d'entraînement (11), dont l'articulation de manivelle de griffe (12) tourne autour de l'arbre d'entraînement (11) lors de l'entraînement de la griffe plongeante (2) et dont le bras moteur (5) agit sur la griffe plongeante (2) de façon à pouvoir pivoter, l'extrémité de la griffe plongeante (2), tournée à l'écart des pointes de griffe (21, 22), portant une articulation de griffe (7) qui est raccordée de façon articulée, par l'intermédiaire d'un levier de griffe (72), en va-et-vient sur un palier (14) de position fixe, caractérisé en ce que l'arbre d'entraînement (11) entraîne une manivelle de commande (4, 6, 19), comportant une articulation de manivelle de commande (19) sur le bras d'entraînement (8), dont le bras de manivelle (4) est raccordé rigidement en rotation à l'arbre d'entraînement (11) ainsi qu'à une des extrémités d'un bras de commande (6) qui porte à son autre extrémité une articulation pivotante (15) qui est articulée par un bras oscillant (71) sur le palier (14) de position fixe.

2. Système d'avancement de film suivant la revendication 1, caractérisé en ce que le bras oscillant (71) fait partie d'une bielle oscillante (7) qui est constituée de trois bras (71, 72, 73) raccordés rigidement l'un à l'autre, montés sur le palier (14) de position fixe, et dont le bras oscillant (71) est prolongé par le bras de commande (6) et un levier de griffe (72) est prolongé ver l'extérieur au-delà du palier (14) de position fixe et porte à son extrémité un coussinet de pivotement (17) qui déplace en va-et-vient par l'intermédiaire d'un levier de griffe d'arrêt (31) ainsi que par l'intermédiaire d'un autre coussinet de pivotement (18) une broche de griffe d'arrêt (3) montée perpendiculairement à la surface de défilement du film.

3. Système d'avancement de film suivant la revendication 1 ou 2, caractérisé en ce que le bras de commande (6) glisse avec son extrémité opposée à l'articulation tournante (15) sur une trajectoire de commande.

4. Système d'avancement de film suivant l'une des revendications précédentes, caractérisé en ce que, pour l'adaptation aux données locales de la courbe de déplacement des pointes de griffe plongeante (21, 22) et de la profondeur d'enfoncement de la broche de griffe d'arrêt (3), la position du palier (14) de position fixe ainsi que les longueurs utiles du levier de griffe (72) et des deux bras de manivelle de griffe (5, 8) peuvent être modifiées.

5. Système d'avancement de film suivant l'une des revendications précédentes, caractérisé en ce que l'arbre d'entraînement (11) est équilibré par un segment d'équilibrage (40) qui est agencé de préférence entre l'articulation de manivelle de griffe (12) et l'articulation de manivelle de commande (19).

6. Système d'avancement de film suivant l'une des revendications précédentes, caractérisé en ce que les paliers ou articulations (12 à 19) du mécanisme d'avancement sont réalisés sous la forme de roulements à billes et/ou de paliers lisses.

7. Système d'avancement de film suivant l'une des revendications précédentes, caractérisé en ce que la griffe plongeante (2) présente deux pointes de griffe (21, 22) qui sont situées l'une derrière l'autre dans le sens d'avancement et dont les côtés antérieurs situés dans le sens d'avancement sont biaisés de façon que, lors de chaque pas d'avancement, d'abord le côté antérieur de la première pointe de griffe (21) et ensuite le côté antérieur de la seconde pointe de griffe (22) agissent sur le côté de trou de perforation respectivement adjoint du film (1), le côté antérieur de la première pointe de griffe (21) se détachant du côté du trou de perforation qui lui est adjoint dès que le côté antérieur de la seconde pointe de griffe (22) vient en contact avec le côté du trou de perforation qui lui est adjoint.
